# FASCICULE DE BREVET EUROPEEN

(11) **EP 2 095 372 B1**
(45) Date de publication et mention de la délivrance du brevet: **17.03.2010**
(21) Numéro de dépôt: 07821651.2
(22) Date de dépôt: 22.10.2007
(51) Int. Cl.: G21C 19/44, G21F 9/12, C22B 60/02, C01F 17/00, C01G 56/00, B01D 11/04

(54) **SEPARATION GROUPEE DES ACTINIDES A PARTIR D'UNE PHASE AQUEUSE FORTEMENT ACIDE, UTILISANT UN EXTRACTANT SOLVATANT EN MILIEU RELARGANT**
GRUPPIERTE TRENNUNG VON ACTINIDEN AUS EINER STARK SAUREN WÄSSRIGEN ZUSAMMENSETZUNG UNTER VERWENDUNG EINES LÖSENDEN EXTRAKTIONSMITTELS IN EINEM SALZUNGSMEDIUM
GROUPED SEPARATION OF ACTINIDES FROM A HIGHLY ACIDIC AQUEOUS COMPOSITION A SOLVATING EXTRACTANT IN A SALTING MEDIUM

(30) Priorité: 23.10.2006 FR 0654444
(43) Date de publication de la demande: 02.09.2009
(73) Titulaire: Commissariat à l'Energie Atomique, 75015 Paris (FR)
(72) Inventeur: MIGUIRDITCHIAN, Manuel, 84000 Avignon (FR); BARON, Pascal, 30200 Bagnols Sur Ceze (FR)
(74) Mandataire: Ilgart, Jean-Christophe
(86) Numéro de dépôt international: PCT/EP2007/061287
(87) Numéro de publication internationale: WO 2008/049807

(56) Documents cités:
- EP-A1- 0 110 789
- EP-A1- 0 505 277
- FR-A1- 2 810 679
- FR-A1- 2 845 616

## Description

### DOMAINE TECHNIQUE

La présente invention se rapporte à un procédé qui permet de séparer ensemble tous les actinides (III), (IV), (V) et (VI) présents dans une phase aqueuse fortement acide, des produits de fission, et en particulier des lanthanides, se trouvant également dans cette phase, en utilisant un extractant solvatant en milieu relargant.

Ce procédé est susceptible d'être utilisé dans le domaine du retraitement des combustibles nucléaires irradiés, notamment pour récupérer le plutonium, le neptunium, l'américium, le curium et éventuellement l'uranium, de façon groupée mais sélective vis-à-vis des produits de fission, à partir d'une solution de dissolution d'un combustible nucléaire irradié, en aval d'un cycle d'extraction de l'uranium.

### ETAT DE LA TECHNIQUE ANTERIEURE

La stratégie de retraitement des combustibles nucléaires irradiés, telle qu'elle est appliquée de nos jours dans les usines modernes de retraitement comme les usines UP3 et UP2-800 du site de La Hague d'AREVA NC en France, ou Rokkasho au Japon, est basée sur le procédé PUREX qui permet de séparer l'uranium et le plutonium, non seulement des autres éléments chimiques présents dans ces combustibles, mais également l'un de l'autre, et de les purifier.

Dans l'optique de réaliser une séparation poussée des radionucléides à vie longue, il a été proposé, d'une part, de modifier le procédé PUREX de sorte à ce qu'il permette d'isoler aussi le neptunium, et, d'autre part, d'utiliser en aval du procédé PUREX des procédés permettant de séparer l'américium, le curium et les lanthanides du reste des produits de fission, puis l'américium et le curium des lanthanides, et enfin l'américium du curium.

Pour séparer l'américium et le curium (qui se trouvent au degré d'oxydation III dans les raffinats issus du procédé PUREX) des lanthanides (qui sont également au degré d'oxydation III dans ces raffinats), il a notamment été proposé deux procédés qui sont respectivement connus sous les appellations SETFICS et SANEX.

Le procédé SETFICS, qui est décrit dans la demande de brevet français 2 738 663 [1], consiste :
- à coextraire l'américium et le curium, conjointement avec les lanthanides, d'une phase aqueuse nitrique de forte acidité, au moyen d'une phase organique comprenant, comme extractant, un mélange d'oxyde d'octyle (phényle)-N,N-diisobutylcarbamoylméthylphosphine (ou CMPO) et de tri-n-butylphosphate (ou TBP), puis
- après une réduction de l'acidité de la phase organique obtenue à l'issue de cette coextraction, à désextraire sélectivement l'américium et le curium de la phase organique au moyen d'une phase aqueuse nitrique de faible acidité, contenant, d'une part, un agent capable de complexer l'américium et le curium et de faire ainsi migrer ces éléments dans la phase aqueuse, et, d'autre part, des ions nitrate pour retenir les lanthanides dans la phase organique.

Le procédé SANEX, qui est décrit par Baron P. et al. dans Proceedings of the International Conférence on Back-End of the Fuel Cycle : From Research to solutions GLOBAL'01, Paris, France, 9-13 septembre 2001, publié par INIS-FR-1108 **[2],** consiste :
- à coextraire les actinides et les lanthanides d'une phase aqueuse fortement nitrique au moyen d'une phase organique contenant deux extractants opérant dans des domaines chimiques disjoints, à savoir un premier extractant, de type extractant solvatant, qui est apte à extraire conjointement l'américium, le curium et les lanthanides d'une phase aqueuse nitrique de forte acidité, et un deuxième extractant, de type échangeur cationique, qui est apte à extraire ces éléments d'une phase aqueuse nitrique de faible acidité, puis
- à désextraire l'américium et le curium de la phase organique obtenue à l'issue de cette coextraction au moyen d'une phase aqueuse faiblement acide pour que les lanthanides soient retenus dans la phase organique mais qui contient un agent capable de complexer sélectivement l'américium et le curium pour faire migrer ces deux éléments dans cette phase aqueuse.

Afin de limiter le risque de prolifération lié à l'existence de plutonium isolé dans le procédé PUREX et dans la perspective d'une fabrication en ligne des futurs combustibles nucléaires, on cherche actuellement à développer des procédés permettant de récupérer, à partir d'une solution de dissolution d'un combustible nucléaire irradié qui serait préalablement débarrassée de son uranium, tous les autres actinides présents dans cette solution, c'est-à-dire le plutonium, le neptunium, l'américium et le curium, de façon groupée mais sélective vis-à-vis des produits de fission.

Le développement de tels procédés doit prendre en compte un certain nombre de contraintes qui n'existent pas dans le cas de la séparation des actinides(III) des lanthanides (III) et, en particulier, le fait que d'une part, le plutonium, le neptunium, l'américium et le curium se trouvent à des degrés d'oxydation différents en solution, allant du degré d'oxydation III pour l'américium et le curium, au degré d'oxydation VI pour le plutonium et le neptunium, et que, d'autre part, une solution de dissolution d'un combustible nucléaire irradié n'ayant été débarrassée que de son uranium présente une teneur totale en cations très élevée (d'au minimum 0,1 mol/L), notamment en plutonium.

### EXPOSE DE L'INVENTION

La présente invention a justement pour objet un procédé de séparation groupée des actinides (III), (IV), (V) et (VI) présents dans une phase aqueuse fortement acide, contenant également des produits de fission dont des lanthanides et de l'yttrium, lequel procédé comprend les étapes suivantes :
a) la coextraction des actinides, des lanthanides, de l'yttrium et éventuellement de quelques autres produits de fission de la phase aqueuse fortement acide par mise en contact de cette phase avec une phase organique non miscible à l'eau, qui contient au moins un extractant solvatant choisi parmi les diglycolamides et les malonamides, dans un diluant organique ; et
b) la désextraction sélective des actinides de la phase organique par mise en contact de cette phase organique avec une phase aqueuse faiblement acide contenant au moins un agent complexant et des ions nitrate.

Dans ce qui précède et ce qui suit, les expressions "*phase aqueuse fortement acide"* et "*phase aqueuse faiblement acide*" sont prises dans leur acceptation habituelle dans le domaine du retraitement des combustibles nucléaires irradiés, à savoir qu'une phase aqueuse fortement acide présente généralement un pH au plus égal à 0, ce qui correspond, par exemple, à une solution aqueuse d'acide nitrique de molarité au moins égale à 1, tandis qu'une phase aqueuse faiblement acide présente généralement un pH strictement supérieur à 0, ce qui correspond, par exemple, à une solution aqueuse d'acide nitrique de molarité strictement inférieure à 1.

Comme précédemment mentionné, la phase organique utilisée à l'étape a) contient au moins un extractant solvatant choisi parmi les diglycolamides et les malonamides (aussi appelés propanediamides), dans un diluant organique.

Comme diglycolamides, on peut notamment utiliser ceux décrits dans la demande de brevet français 2 810 679 **[3].** Ces diglycolamides répondent à la formule (I) ci-après :

R¹(R²)N-C(O)-CH₂-O-CH₂-C(O)-N(R³)R⁴ (I)

dans laquelle R¹ à R⁴, qui peuvent être identiques ou différents, sont des groupes alkyles.

Parmi ceux-ci, on préfère utiliser ceux dans lesquels lesdits groupes alkyles comprennent de 3 à 12 atomes de carbone comme le N,N,N',N'-tétraoctyl-3-oxapentanediamide (ou TODGA), et le N,N,N',N'-tétra-décyl-3-oxapentanediamide (ou TDDGA), le TODGA étant tout particulièrement préféré.

Comme malonamides, on peut notamment utiliser ceux décrits dans la demande de brevet français 2 674 256 **[4].** Ces malonamides répondent à la formule (II) ci-après :

R⁵(R⁶)N-C(O)-CH(R⁷)-C(O)-N(R⁶)R⁵ (II)

dans laquelle :
- R⁵ et R⁶, qui peuvent être identiques ou différents, représentent un groupe alkyle linéaire ou ramifié comprenant de 1 à 25 atomes de carbone ou un groupe de formule (III) ci-après :

   -(CH₂)ₙ-Z-(CH₂)ₘ-O-R⁸ (III)

   dans laquelle R⁸ est un groupe alkyle comprenant de 1 à 13 atomes de carbone, n est un nombre entier allant de 0 à 6, Z est une simple liaison ou un atome d'oxygène et m est un nombre entier allant de 1 à 6, à condition que Z soit une simple liaison lorsque n est égal à 0 ; tandis que
- R⁷ représente un radical alkyle comprenant de 12 à 25 atomes de carbone ou un groupe de formule (III) ci-avant dans laquelle R⁸, n, Z et m ont la même signification que précédemment.

Parmi ces malonamides, on préfère utiliser ceux dans lesquels R⁷ représente un radical alkyle en C₁₂ à C₂₅ comme le N,N'-diméthyl-N,N'-dibutyltétradécylmalonamide (ou DMDBTDMA) et le N,N'-diméthyl-N,N'-dibutyldodécylmalonamide (ou DMDBDDEMA), et ceux dans lesquels R⁷ représente un groupe de formule : -(CH₂)ₘ-OR⁸ dans laquelle R⁸ et m ont la même signification que précédemment comme le N,N'-diméthyl-N,N'-dioctylhexyléthoxymalonamide (ou DMDOHEMA).

Quant au diluant organique, il peut être choisi parmi les différents hydrocarbures qui ont été proposés pour la réalisation d'extractions liquide-liquide comme le toluène, le xylène, le t-butylbenzène, le tri-isopropylbenzène, le kérosène et les dodécanes linéaires ou ramifiés tels que le n-dodécane ou le tétrapropylène hydrogéné (TPH), et les mélanges de ces hydrocarbures.

Quel que soit l'extractant solvatant utilisé, il est possible, conformément à l'invention, d'augmenter la capacité de charge de la phase organique utilisée à l'étape a) - c'est-à-dire la teneur maximale en cations que peut présenter cette phase sans que se produise la formation d'une troisième phase par démixtion - en ajoutant à cette phase organique un dialkylmonoamide au moins aussi lipophile que l'extractant solvatant comme, par exemple, le N,N-dihexyloctanamide (ou DHOA), ou bien un phosphate de trialkyle comme le phosphate de tri-n-butyle (ou TBP). Dans ce cas, la concentration du dialkylmonoamide ou du phosphate de trialkyle dans la phase organique est, de préférence, de l'ordre de 0,3 à 1 mol/L.

A l'étape a), la coextraction de certains produits de fission (autres que les lanthanides et l'yttrium) comme, par exemple, le zirconium, le strontium, le ruthénium, le palladium et le molybdène, ainsi que celle d'autres cations considérés comme indésirables, peut avantageusement être évitée ou, à tout le moins être limitée, en ajoutant un agent complexant et, mieux encore, un mélange de plusieurs agents complexants à la phase aqueuse fortement acide.

Ce ou ces agents complexants peuvent notamment être choisis parmi les acides pyridine polycarboxyliques (par exemple, l'acide 2,6-pyridine dicarboxylique), les acides polyaminocarboxyliques (par exemple, l'acide N-(2-hydroxy-éthyl)éthylène diamine triacétique ou HEDTA, l'acide diéthylène triamine pentaacétique ou DTPA), les acides carboxyliques, les acides hydroxycarboxyliques, les polypyridines hydrophiles, les acides dithiophosphoniques, les amines, les polyazines greffées de chaînes alkyles comprenant de 1 à 8 atomes de carbone, les hydroxyoximes, les acides sulfoniques, les acides hydroxamiques et les β-dicétones.

Par ailleurs, l'étape a) peut, de plus, comprendre le lavage de la phase organique obtenue à l'issue de la co-extraction par une phase aqueuse fortement acide, par exemple une solution d'acide nitrique au moins 1 M, et contenant avantageusement un ou plusieurs agents complexants du type de ceux précédemment mentionnés, pour retirer de cette phase organique les produits de fission et autres cations indésirables, susceptibles d'avoir suivi les actinides, les lanthanides et l'yttrium dans la phase organique.

Conformément à l'invention, il est également possible d'ajouter à la phase aqueuse fortement acide au moins un agent réducteur propre à réduire le neptunium(V) et le plutonium(IV), respectivement en neptunium(IV) et plutonium(III), et à les stabiliser sous ces formes et ce, pour les rendre plus extractibles par la phase organique. A titre d'agents réducteurs susceptibles d'être utilisés, on peut notamment citer les dérivés alkylés d'hydrazine, les dérivés alkylés d'hydroxylamine et le sulfamate ferreux.

Comme précédemment indiqué, l'étape b) du procédé de l'invention est réalisée en utilisant une phase aqueuse faiblement acide qui contient au moins un agent complexant dont le rôle est de complexer sélectivement les actinides (cette sélectivité s'entendant vis-à-vis des lanthanides et de l'yttrium) pour les faire passer de la phase organique dans cette phase aqueuse, ainsi que des ions nitrate dont le rôle est de maintenir les lanthanides et l'yttrium dans la phase organique de sorte que seuls les actinides soient désextraits de ladite phase organique.

Cette phase aqueuse faiblement acide présente, de préférence, un pH de 1 à 4 et, mieux encore, de l'ordre de 2, que l'on ajuste par addition d'une base du type soude, hydrazine, hydroxylamine ou hydroxyde de tétraméthylammonium.

Quant à la concentration de cette phase en ions nitrate, elle est, de préférence, de 1 à 5 mol/L et, mieux encore, de 1 à 4 mol/L.

L'agent complexant utilisé à l'étape b) peut être choisi parmi tous les complexants précédemment mentionnés et, en particulier, parmi les acides polyaminocarboxyliques comme l'HEDTA ou le DTPA, tandis que les ions nitrate peuvent provenir d'un sel d'un métal alcalin comme le nitrate de sodium ou de lithium, ou d'une amine organique comme le nitrate d'hydroxylamine (aussi appelé nitrate d'hydroxylammonium) ou le nitrate d'hydrazine (aussi appelé nitrate d'hydrazinium).

Selon un premier mode de mise en oeuvre du procédé de l'invention, l'étape b) est réalisée immédiatement après l'étape a), auquel cas la phase aqueuse faiblement acide contient, de plus, un agent tampon tel qu'un acide hydroxycarboxylique comme l'acide glycolique ou l'acide citrique, pour qu'elle puisse conserver sensiblement le même pH pendant toute la durée de l'étape b) en dépit de l'acidité que présente la phase organique obtenue à l'issue de l'étape a).

Selon un deuxième mode de mise en oeuvre du procédé selon l'invention, ce dernier comprend, entre l'étape a) et l'étape b), une étape de désextraction de l'acide présent dans la phase organique obtenue à l'issue de l'étape a), par mise en contact de cette phase avec une phase aqueuse faiblement acide, par exemple d'un pH de 1 à 3, et contenant de 0,1 à 3 mol/L d'ions nitrate du type de ceux précédemment cités, auquel cas il n'est pas nécessaire de prévoir la présence d'un agent tampon dans la phase aqueuse faiblement acide utilisée à l'étape b).

Selon une disposition préférée de ce deuxième mode de mise en oeuvre, l'étape de désextraction de l'acide est couplée à l'étape a), c'est-à-dire qu'elle est réalisée dans la même colonne ou batterie d'extracteurs que celle où se déroule l'étape a).

Lorsque la phase organique est destinée à être réutilisée, notamment pour procéder à une nouvelle séparation groupée d'actinides, alors le procédé comprend, de plus, une étape consistant à désextraire les lanthanides et l'yttrium de la phase organique, que l'on réalise après l'étape b).

Pour ce faire, la phase organique est mise en contact avec une phase aqueuse acide, de préférence exempte de tout complexant, comme une solution d'acide nitrique diluée, par exemple de molarité allant de 0,01 à 0,1.

Il est, toutefois, également possible d'utiliser une solution aqueuse (faiblement ou fortement) acide, contenant un agent complexant tel qu'un acide polyaminocarboxylique, un acide phosphoré, un acide sulfonique ou une polyazine hydrophile.

Lorsque la phase organique est destinée à être réutilisée, le procédé selon l'invention comprend, en dernier lieu, une étape de traitement de la phase organique qui est destinée à en éliminer les produits de dégradation et les impuretés qui s'y sont accumulés au cours des étapes précédentes.

Cette étape de traitement peut comprendre, comme déjà décrit dans l'état de la technique, une ou plusieurs opérations de lavage de la phase organique par des phases aqueuses contenant des composés aptes à complexer sélectivement les produits de dégradation et les impuretés qu'elle contient, et à permettre, ainsi, leur transfert dans ces phases sans désextraire pour autant les premier et deuxième extractants, et une ou plusieurs opérations de filtration si la phase organique renferme un précipité.

L'invention a aussi pour objet un procédé de retraitement d'un combustible nucléaire irradié, qui comprend la mise en oeuvre d'un procédé de séparation groupée des actinides (III), (IV), (V) et (VI) tel que précédemment défini, et son utilisation pour récupérer le plutonium, le neptunium, l'américium, le curium et éventuellement l'uranium, de façon groupée mais sélective vis-à-vis des produits de fission à partir d'une solution de dissolution d'un combustible nucléaire irradié, en aval d'un cycle d'extraction de l'uranium.

L'invention sera mieux comprise à la lecture des exemples qui suivent et qui se réfèrent aux figures annexées.

Il va de soi que ces exemples ne sont donnés qu'à titre d'illustrations de l'objet de l'invention et ne doivent en aucun cas être interprétés comme une limitation de cet objet.

### BREVE DESCRIPTION DE LA FIGURE

La figure 1 est un schéma de principe d'un mode de mise en oeuvre du procédé de l'invention.
La figure 2 est un schéma de principe d'une variante du mode de mise en oeuvre montré sur la figure 1.

Sur ces figures, les rectangles référencés 1, 2, 3, 4 et 5 représentent schématiquement des extracteurs multiétagés classiquement utilisés dans le retraitement des combustibles nucléaires irradiés comme, par exemple, des extracteurs constitués par des batteries de mélangeurs-décanteurs, où un mélangeur associé à un décanteur représente un étage théorique.

Les flux de phase solvant entrant et sortant de ces extracteurs sont symbolisés par un double trait, tandis que les flux de phase aqueuse entrant et sortant de ces extracteurs sont symbolisés par un simple trait.

### EXPOSE DETAILLE DE L'INVENTION

### EXEMPLE 1 : Exposé détaillé de modes de mise en oeuvre du procédé de l'invention

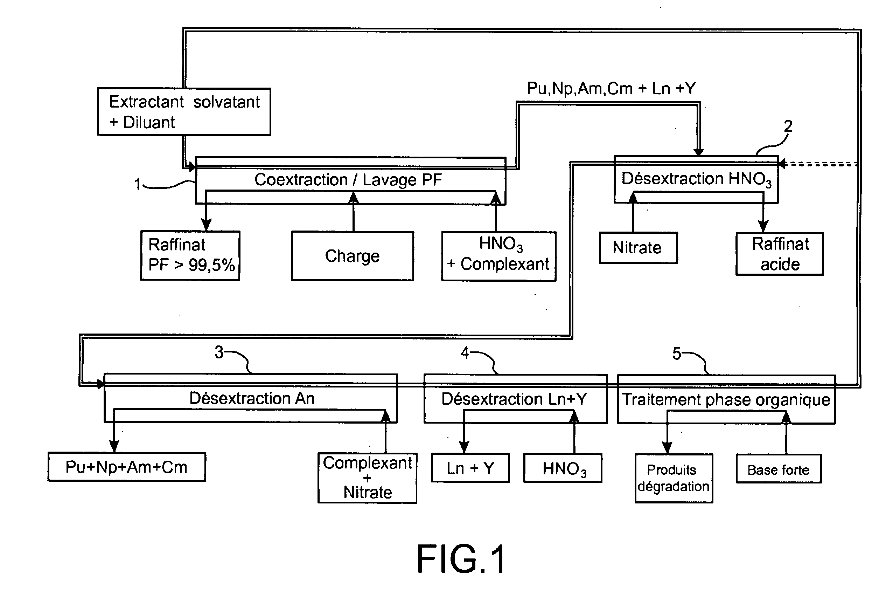

On se réfère à la figure 1 qui illustre schématiquement un mode de mise en oeuvre du procédé de l'invention, conçu pour séparer de façon groupée le plutonium, le neptunium, l'américium, le curium et l'uranium, éventuellement présent à l'état de traces, des produits de fission à partir d'une solution de dissolution d'un combustible nucléaire irradié, après extraction de l'uranium qu'elle contient.

Cette solution est une solution aqueuse fortement acide, par exemple une solution d'acide nitrique 2 à 5 M, qui contient des actinides, des lanthanides (lanthane, cérium, praséodyme, néodyme, samarium, europium, ...), des produits de fission qui ne sont pas des lanthanides comme l'yttrium, le molybdène, le zirconium, le rubidium, le ruthénium, le césium, le baryum, le palladium, le strontium et le rhodium, et des cations qui ne sont pas des produits de fission comme le fer et le chrome.

Dans cet exemple de mise en oeuvre, le procédé comprend successivement les étapes suivantes :
* une étape comprenant la coextraction des actinides, des lanthanides et de l'yttrium dans une phase organique, puis le lavage de cette phase organique pour en retirer les produits de fission et autres cations indésirables susceptibles d'avoir suivi les actinides, les lanthanides et l'yttrium au cours de la coextraction (cette étape étant notée "Coextraction/Lavage PF" sur la figure 1) ;
* une étape de désextraction de l'acide nitrique de la phase organique (notée "Désextraction HNO₃" sur la figure 1) ;
* une étape de désextraction sélective des actinides de la phase organique ainsi désacidifiée (notée "Désextraction An" sur la figure 1) ;
* une étape de désextraction des lanthanides et de l'yttrium de la phase organique (notée "Désextraction Ln + Y" sur la figure 1) ; et
* une étape de traitement de la phase organique (notée "Traitement phase organique" sur la figure 1).

Dans la première étape (Coextraction/Lavage PF), une phase organique, non miscible à l'eau, qui contient au moins un extractant solvatant choisi parmi les diglycolamides et les malonamides, par exemple du TODGA, dans un diluant organique, est tout d'abord mise en contact avec la solution aqueuse fortement acide dont on souhaite coextraire les actinides, les lanthanides et l'yttrium et qui est dénommée "CHARGE" sur la figure 1.

Un dialkylmonoamide au moins aussi lipophile que l'extractant solvatant, tel que le DHOA, ou bien un phosphate de trialkyle tel que le TBP, peut également être présent dans la phase organique pour augmenter sa capacité de charge.

La solution aqueuse fortement acide peut être additionnée d'un agent complexant ou, mieux encore, de plusieurs agents complexants pour empêcher ou, à tout le moins limiter, la coextraction de certains produits de fission comme le zirconium, le strontium, le ruthénium, le palladium et le molybdène, ou d'autres cations indésirables, ainsi que d'un ou plusieurs agents réducteurs propres à réduire le neptunium(V) en neptunium(IV) et à le stabiliser sous cette forme.

Ce ou ces agents complexants peuvent notamment être choisis parmi les acides pyridine polycarboxyliques comme l'acide 2,6-pyridine dicarboxylique, que l'on utilise à une concentration, par exemple, de 0,3 mol/L, et les acides polyaminocarboxyliques comme l'acide N-(2-hydroxyéthyl)éthylène diamine triacétique (HEDTA) ou l'acide diéthylène triamine pentaacétique (DTPA), que l'on utilise à une concentration, par exemple, de 0,01 mol/L, les acides carboxyliques comme l'acide oxalique et les acides hydroxycarboxyliques comme l'acide citrique. Toutefois, ils peuvent également être choisis parmi les amines, les polyazines, les hydroxyoximes, les acides sulfoniques, les acides hydroxamiques et les β-dicétones.

Le ou les agents réducteurs peuvent, quant à eux, être choisis parmi les dérivés alkylés d'hydrazine, les dérivés alkylés d'hydroxylamine et le sulfamate ferreux.

Puis, pour le lavage PF, la phase organique est mise en contact avec une phase aqueuse fortement acide, par exemple une solution d'acide nitrique 1 M qui contient un ou plusieurs agents complexants du type de ceux précédemment mentionnés.

A l'issue de cette première étape, on obtient donc, d'une part, une phase aqueuse qui contient les produits de fission non extractibles par la phase organique, et, d'autre part, une phase organique dans laquelle se trouvent le plutonium, le neptunium, l'américium, le curium, les éventuelles traces d'uranium, les lanthanides et l'yttrium.

Dans la deuxième étape (Désextraction HNO₃), la phase organique est mise en contact, à contre-courant, avec une phase aqueuse faiblement acide qui contient au moins des ions nitrate. Une telle phase aqueuse est, par exemple, une solution aqueuse de nitrate d'hydroxylamine 0,1 à 3 M, de pH 2.

Dans la troisième étape (Désextraction An), la phase organique est mise en contact, à contre-courant, avec une phase aqueuse faiblement acide, par exemple de pH 2, qui contient à la fois au moins un agent complexant et des ions nitrate.

L'agent complexant peut notamment être un acide polyaminocarboxylique comme l'HEDTA ou le DTPA, que l'on utilise à une concentration, par exemple, de 0,01 à 0,5 mol/L, tandis que les ions nitrate sont, de préférence, les mêmes que ceux utilisés à l'étape précédente, que l'on utilise alors à une concentration allant de 1 à 4 M.

On obtient ainsi, à l'issue de cette troisième étape, une phase aqueuse dans laquelle se trouvent le plutonium, le neptunium, l'américium, le curium et les éventuelles traces d'uranium, et une phase organique débarrassée de ces éléments.

Dans la quatrième étape (Désextraction Ln + Y), la phase organique est mise en contact, à contre-courant, avec une solution aqueuse acide dont l'acidité s'inscrit dans un domaine de pH dans lequel le pouvoir extractant de la phase organique est minimal vis-à-vis des lanthanides et de l'yttrium. Une telle solution est, par exemple, une solution d'acide nitrique 0,01 à 0,1 M.

On obtient ainsi, à l'issue de cette quatrième étape, une phase aqueuse chargée en lanthanides et en yttrium, et une phase organique débarrassée de ces éléments.

Enfin, dans la cinquième étape, la phase organique est traitée, par exemple par un ou plusieurs lavages par une solution aqueuse d'une base forte, de pH égal ou supérieur à 8, comme une solution de carbonate de sodium ou d'hydroxyde de sodium 0,1 à 0,3 M et, accessoirement, par une ou plusieurs filtrations dans le cas où elle renferme un précipité, pour la débarrasser des produits de dégradation et impuretés qui s'y sont accumulés au cours des étapes précédentes.

Ainsi purifiée, la phase organique peut être réutilisée pour la mise en oeuvre d'un cycle suivant.

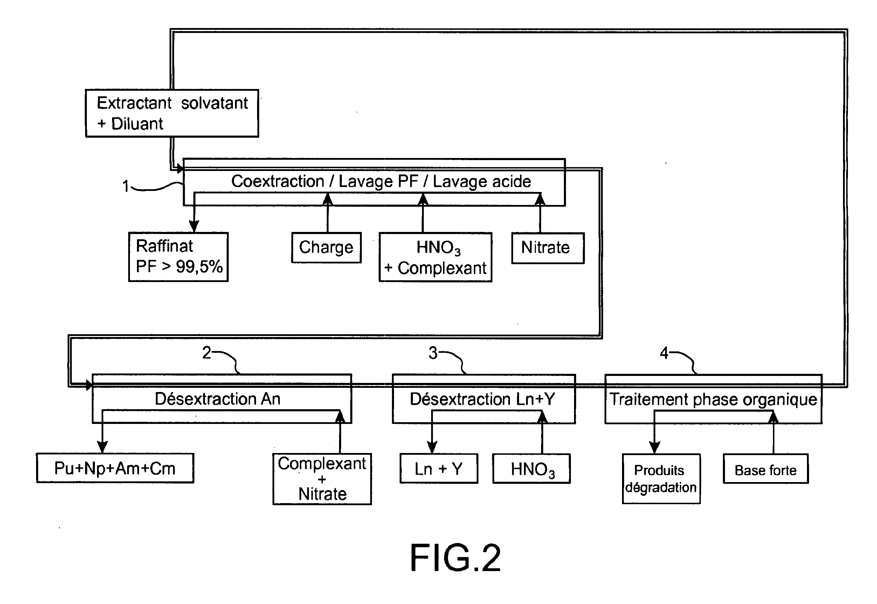

On se réfère à présent à la figure 2 qui illustre une variante du mode de mise en oeuvre montré sur la figure 1, variante dans laquelle l'étape de désextraction de l'acide nitrique (dénommée "Lavage acide" sur la figure 2) est couplée à l'étape de coextraction des actinides, des lanthanides et de l'yttrium, et de lavage de la phase organique lui faisant suite (lavage PF), c'est-à-dire qu'elle est réalisée dans les derniers étages de l'extracteur 1. Ainsi, dans les derniers étages de cet extracteur, la phase organique issue du lavage PF est mise en contact, à contre-courant, avec une phase aqueuse faiblement acide contenant des ions nitrate, laquelle peut être du même type que celle utilisée dans le mode de mise en oeuvre illustré sur la figure 1.

La phase aqueuse contenant l'acide nitrique désextrait dilue ensuite la charge introduite entre les étages de l'extracteur 1 qui sont dévolus à la coextraction des actinides, des lanthanides et de l'yttrium et ceux qui sont dévolus au lavage de la phase organique, tandis que la phase organique est dirigée vers l'extracteur 2 pour être soumise à l'étape de désextraction sélective des actinides.

L'étape de désextraction sélective des actinides et les étapes suivantes se déroulent exactement comme dans le mode de mise en oeuvre montré sur la figure 1.

### EXEMPLE 2 : Validation expérimentale du procédé selon l'invention

### 1) Coextraction :

La coextraction a été validée expérimentalement en utilisant :
* une phase organique renfermant 0,1 mol/L de TODGA dans du TPH ; et
* une phase aqueuse constituée d'une solution d'acide nitrique 3 M (ce qui correspond à l'acidité classiquement retenue pour une solution de dissolution d'un combustible nucléaire irradié), contenant du neptunium(IV), du plutonium(III), de l'américium et du curium en tant qu'actinides, et de l'europium en tant que lanthanide.

Tous ces éléments étaient présents dans la phase aqueuse à l'état de traces, c'est-à-dire à des concentrations de l'ordre de 10⁻⁵-10⁻⁶ mol/L, à l'exception du neptunium qui était, lui, présent à une concentration de 1,5.10⁻³ mol/L.

Pour stabiliser le neptunium et le plutonium respectivement au degré d'oxydation IV et au degré d'oxydation III, la phase aqueuse nitrique contenait également un mélange de nitrate d'hydroxylamine et de nitrate d'hydrazine, aux concentrations respectives de 0,1 mol/L et 0,2 mol/L.

La phase organique, préalablement équilibrée en acide avec de l'acide nitrique 3 M, a été mise en contact avec la phase aqueuse nitrique à raison de 1 volume de phase organique pour 1 volume de phase aqueuse et le mélange a été agité pendant 1 heure à 25°C.

Après décantation et séparation des phases organique et aqueuse, les activités volumiques des différents éléments ont été mesurées dans les deux phases, organique et aqueuse, en vue de déterminer leurs coefficients de distribution D_{M}.

Le coefficient de distribution D_{M} d'un élément M correspond au rapport entre l'activité volumique ou la concentration de cet élément dans la phase organique et l'activité volumique ou la concentration de ce même élément dans la phase aqueuse.

Les activités volumiques du plutonium, du neptunium et du curium ont été mesurées par spectrométrie α, tandis que les activités volumiques de l'américium et de l'europium ont été mesurées par spectrométrie γ.

Le tableau I ci-après présente les coefficients de distribution D_{M} ainsi obtenus.

**Tableau I**

| | | | | | |
|---|---|---|---|---|---|
| **Eléments** | Np(IV) | Pu (III) | Am | Cm | Eu |
| **D_{M}** | 730 | 1400 | 1700 | 630 | > 1000 |

Ce tableau montre que tous les actinides présents dans la phase aqueuse nitrique ont été bien extraits dans la phase organique.

### 2) Désextraction de l'acide nitrique :

La désextraction de l'acide nitrique a été validée expérimentalement en utilisant :
- la phase organique obtenue à l'issue de l'expérience décrite au point 1) du présent exemple ; et
- une phase aqueuse constituée par une solution aqueuse de nitrate d'hydroxylamine 1 M, de pH 2.

Ces deux phases ont été mises en contact à raison de 1 volume de phase organique pour 1 volume de phase aqueuse et le mélange a été agité pendant 1 heure à 25°C.

Après décantation et séparation des phases organique et aqueuse, les activités volumiques des différents éléments ont été mesurées dans les deux phases, organique et aqueuse, en vue de déterminer leurs coefficients de distribution D_{M}.

Comme précédemment, les activités volumiques du neptunium, du plutonium et du curium ont été mesurées par spectrométrie α, celles de l'américium et de l'europium ont été mesurées par spectrométrie γ.

Le tableau II ci-après présente les coefficients de distribution D_{M} ainsi obtenus.

**Tableau II**

| | | | | | | |
|---|---|---|---|---|---|---|
| **Eléments** | H⁺ | Np(IV) | Pu (III) | Am | Cm | Eu |
| **D_{M}** | 0, 1 | 20 | 4 | 5 | 9 | 35 |

Ce tableau montre qu'une phase aqueuse telle que décrite ci-dessus permet de désextraire l'acide nitrique d'une phase organique en limitant les fuites d'actinides en phase aqueuse.

Dans le mode de mise en oeuvre illustré sur la figure 1, comme symbolisé par la flèche en pointillés, les actinides ayant été désextraits en phase aqueuse au cours de l'étape de désextraction de l'acide nitrique peuvent néanmoins être récupérés en phase organique en ajoutant, à l'extracteur 2, des étages supplémentaires mettant en contact, en fin de batterie, ladite phase aqueuse avec une partie de la phase organique déchargée et purifiée de ses produits de dégradation.

Dans le cas de la variante illustrée sur la figure 2, les actinides désextraits dans les derniers étages de l'extracteur 1, seront récupérés en phase organique dans les étages de cet extracteur qui sont dévolus à la coextraction des actinides, des lanthanides et de l'yttrium.

### 3) Désextraction sélective des actinides :

La désextraction sélective des actinides a été validée expérimentalement en utilisant :
* la phase organique obtenue à l'issue de l'expérience décrite au point 2) du présent exemple ; et
* une phase aqueuse constituée par une solution aqueuse de DTPA et de nitrate d'hydroxylamine, aux concentrations respectives de 0,01 mol/L et de 2 mol/L, de pH 2.

Ces deux phases ont été mises en contact à raison de 1 volume de phase organique pour 1 volume de phase aqueuse et le mélange a été agité pendant 1 heure à 25°C.

Après décantation et séparation des phases organique et aqueuse, les activités volumiques des différents éléments ont été mesurées dans les deux phases, organique et aqueuse, en vue de déterminer leurs coefficients de distribution D_{M}, puis les facteurs de séparation FS_{Eu/An}.

On définit le facteur de séparation entre deux éléments M1 et M2, noté FS_{M1/M2}, comme étant le rapport entre les coefficients de distribution, respectivement D_{M1} et D_{M2}, de ces deux éléments. On considère que la séparation entre les deux éléments M1 et M2 est satisfaisante lorsque le facteur de séparation FS_{M1/M2} est supérieur à 10.

Comme précédemment, les activités volumiques du plutonium, du neptunium et du curium ont été mesurées par spectrométrie α, tandis que celles de l'américium et de l'europium ont été mesurées par spectrométrie γ.

Le tableau III ci-après présente les coefficients de distribution D_{M} et les facteurs de séparation FS_{Eu/An} tels qu'obtenus pour les différents éléments.

**Tableau III**

| | | | | | |
|---|---|---|---|---|---|
| **Eléments** | Np(IV) | Pu (III) | Am | Cm | Eu |
| **D_{M}** | 0,001 | 0,001 | 0,1 | 0,09 | 1,1 |
| **FS_{Eu/An}** | > 1000 | > 1000 | 11 | 12 | 1 |

Le tableau montre que tous les actinides ont bien été désextraits de la phase organique avec une très bonne sélectivité vis-à-vis de l'europium.

### REFERENCES CITEES

**[1]** FR-A-2 738 663
**[2]** Baron P. et al., Proceedings of the International Conférence on Back-End of the Fuel Cycle : From Research to solutions GLOBAL'01, Paris, France, 9-13 septembre 2001, publié par INIS-FR-1108
**[3]** FR-A-2 810 679
**[4]** FR-A-2 674 256

## Revendications

1. Procédé de séparation groupée des actinides (III), (IV), (V) et (VI) présents dans une phase aqueuse fortement acide, contenant également des produits de fission dont des lanthanides et de l'yttrium, lequel procédé comprend les étapes suivantes :
a) la coextraction des actinides, des lanthanides, de l'yttrium et éventuellement de quelques autres produits de fission, de la phase aqueuse fortement acide par mise en contact de cette phase avec une phase organique non miscible à l'eau, qui contient au moins un extractant solvatant choisi parmi les diglycolamides et les malonamides, dans un diluant organique ; et
b) la désextraction sélective des actinides de la phase organique par mise en contact de cette phase organique avec une phase aqueuse faiblement acide contenant au moins un agent complexant et des ions nitrate.

2. Procédé selon la revendication 1, dans lequel l'extractant solvatant répond à la formule (I) ci-après :
R¹(R²)N-C(O)-CH₂-O-CH₂-C(O)-N(R³)R⁴ (I)
dans laquelle R¹ à R⁴, qui peuvent être identiques ou différents, sont des groupes alkyles.

3. Procédé selon la revendication 2, dans lequel l'extractant solvatant répond à la formule (I) dans laquelle R¹ à R⁴, qui peuvent être identiques ou différents, sont des groupes alkyles comprenant de 3 à 12 atomes de carbone.

4. Procédé selon la revendication 3, dans lequel l'extractant solvatant est le N,N,N',N'-tétraoctyl-3-oxapentanediamide.

5. Procédé selon la revendication 1, dans lequel l'extractant solvatant répond à la formule (II) ci-après :
R⁵(R⁶)N-C(O)-CH(R⁷)-C(O)-N(R⁶)R⁵ (II)
dans laquelle :
- R⁵ et R⁶, qui peuvent être identiques ou différents, représentent un groupe alkyle linéaire ou ramifié comprenant de 1 à 25 atomes de carbone ou un groupe de formule (III) ci-après :
- (CH₂)ₙ-Z-(CH₂)ₘ-O-R⁸ (III)
dans laquelle R⁸ est un groupe alkyle comprenant de 1 à 13 atomes de carbone, n est un nombre entier allant de 0 à 6, Z est une simple liaison ou un atome d'oxygène et m est un nombre entier allant de 1 à 6, à condition que Z soit une simple liaison lorsque n est égal à 0 ; tandis que
- R⁷ représente un radical alkyle comprenant de 12 à 25 atomes de carbone ou un groupe de formule (III) ci-avant dans laquelle R⁸, n, Z et m ont la même signification que précédemment.

6. Procédé selon la revendication 5, dans lequel l'extractant solvatant répond à la formule (II) dans laquelle R⁷ représente un radical alkyle comprenant de 12 à 25 atomes de carbone ou un groupe de formule : -(CH₂)ₘ-O-R⁸ dans laquelle R⁸ et m ont la même signification que précédemment.

7. Procédé selon la revendication 5, dans lequel l'extractant solvatant est choisi parmi le N,N'-diméthyl-N,N'-dibutyltétradécylmalonamide, le N,N'-diméthyl-N,N'-dibutyldodécylmalonamide et le N,N'-diméthyl-N,N'-dioctylhexyléthoxymalonamide.

8. Procédé selon l'une quelconque des revendications précédentes, dans lequel la phase organique utilisée à l'étape a) contient, de plus, un dialkylmonoamide ou un phosphate de trialkyle.

9. Procédé selon l'une quelconque des revendications précédentes, dans lequel, à l'étape a), la phase aqueuse fortement acide contient au moins un agent complexant pour inhiber la coextraction de certains produits de fission.

10. Procédé selon l'une quelconque des revendications précédentes, dans lequel l'étape a) comprend, de plus, le lavage de la phase organique obtenue à l'issue de la co-extraction par une phase aqueuse fortement acide, contenant au moins un agent complexant.

11. Procédé selon l'une quelconque des revendications précédentes, dans lequel, à l'étape a), la phase aqueuse fortement acide contient au moins un agent réducteur.

12. Procédé selon l'une quelconque des revendications précédentes, dans lequel la phase aqueuse faiblement acide utilisée à l'étape b) présente un pH de 1 à 4 et, mieux encore, de l'ordre de 2.

13. Procédé selon l'une quelconque des revendications précédentes, dans lequel la phase aqueuse faiblement acide utilisée à l'étape b) présente une concentration en ions nitrate de 1 à 5 mol/L et, mieux encore, de 1 à 4 mol/L.

14. Procédé selon l'une quelconque des revendications précédentes, dans lequel l'étape b) est réalisée immédiatement après l'étape a) et la phase aqueuse faiblement acide utilisée à l'étape b) contient, de plus, un agent tampon.

15. Procédé selon l'une quelconque des revendications 1 à 13, qui comprend, entre l'étape a) et l'étape b), une étape de désextraction de l'acide présent dans la phase organique obtenue à l'issue de l'étape a) par mise en contact de cette phase avec une phase aqueuse faiblement acide qui contient des ions nitrate.

16. Procédé selon la revendication 15, dans lequel la phase aqueuse faiblement acide utilisée à l'étape de désextraction de l'acide présente un pH de 1 à 3.

17. Procédé selon la revendication 15 ou la revendication 16, dans lequel la phase aqueuse faiblement acide utilisée à l'étape de désextraction de l'acide présente une concentration en nitrate de 0,1 à 3 mol/L.

18. Procédé selon l'une quelconque des revendications 1 à 15, dans lequel les ions nitrate sont fournis par un sel choisi parmi les nitrates de métaux alcalins et les nitrates d'amines organiques.

19. Procédé selon l'une quelconque des revendications précédentes, qui comprend, de plus, une étape de désextraction des lanthanides et de l'yttrium de la phase organique obtenue à l'issue de l'étape b).

20. Procédé de retraitement d'un combustible nucléaire irradié, qui comprend la mise en oeuvre d'un procédé selon l'une quelconque des revendications 1 à 19, pour récupérer le plutonium, le neptunium, l'américium, le curium et éventuellement l'uranium, de façon groupée mais sélective vis-à-vis des produits de fission à partir d'une solution de dissolution d'un combustible nucléaire irradié, en aval d'un cycle d'extraction de l'uranium.

## Claims

1. Process for the pooled separation of actinide (III), (IV), (V) and (VI) entities present in a highly acidic aqueous phase also comprising fission products, including lanthanides and yttrium, which process comprises the following steps:
a) the coextraction of the actinides, the lanthanides, yttrium and optionally a few other fission products from the highly acidic aqueous phase by bringing this phase into contact with a water-immiscible organic phase which comprises at least one solvating extractant chosen from diglycolamides and malonamides in an organic diluent; and
b) the selective stripping of the actinides from the organic phase by bringing this organic phase into contact with a weakly acidic aqueous phase comprising at least one completing agent and nitrate ions.

2. Process according to Claim 1, in which the solvating extractant corresponds to the formula (I) below:
R¹(R²)N-C(O)-CH₂-O-CH₂-C(O)-N(R³)R⁴ (I)
in which R¹ to R⁴, which can be identical or different, are alkyl groups.

3. Process according to Claim 2, in which the solvating extractant corresponds to the formula (I) in which R¹ to R⁴, which can be identical or different, are alkyl groups comprising from 3 to 12 carbon atoms.

4. Process according to Claim 3, in which the solvating extractant is N,N,N',N'-tetraoctyl-3-oxapentanediamide.

5. Process according to Claim 1, in which the solvating extractant corresponds to the formula (II) below:
R⁵(R⁶)N-C(O)-CH(R⁷)-C(O)-N(R⁶)R⁵ (II)
in which:
- R⁵ and R⁶, which can be identical or different, represent a linear or branched alkyl group comprising from 1 to 25 carbon atoms or a group of formula (III) below:
-(CH₂)ₙ-Z-(CH₂)ₘ-O-R¹ (III)
in which R⁸ is an alkyl group comprising from 1 to 13 carbon atoms, n is an integer ranging from 0 to 6, Z is a single bond or an oxygen atom and m is an integer ranging from 1 to 6, provided that Z is a single bond when n is equal to 0; while
- R⁷ represents an alkyl radical comprising from 12 to 25 carbon atoms or a groupe of formula (III) above in which R⁸, n, Z and m have the same meanings as above.

6. Process according to Claim 5, in which the solvating extractant corresponds to the formula (II) in which R⁷ represents an alkyl radical comprising from 12 to 25 carbon atoms or a group of formula -(CH₂)ₘ-O-R⁸ in which R⁸ and m have the same meanings as abode.

7. Process according to Claim 5, in which the solvating extractant is chosen from N,N'-dimethyl-N,N'-dibutyltetradecylmalonamide, N,N'-dimethyl-N,N'-dibutyldodecylmaionamide and N,N'-dimethyl-N,N'-dioctylhexylethoxymalonamide.

8. Process according to any one of the preceding claims, in which the organic phase used in step a) additionally comprises a dialkylmonoamide or a trialkyl phosphate.

9. Process according to any one of the preceding claims, in which, in step a), the highly acidic aqueous phase comprises at least one complexing agent for inhibiting the coextraction of certain fission products.

10. Process according to any one of the preceding clams, in which step a) furthermore comprises the washing of the organic phase obtained on conclusion of the coextraction with a highly acidic aqueous phase comprising at least one completing agent.

11. Process according to any one of the preceding claims, in which, in step a), the highly acidic aqueous phase comprises at least one reducing agent.

12. Process according to any one of the preceding claims, in which the weakly acidic aqueous phase used in step b) exhibits a pH of 1 to 4 and better still of the order of 2.

13. Process according to any one of the preceding claims, in which the weakly acidic aqueous phase used in step b) exhibits a concentration of nitrate ions of 1 to 5 mol/l and better still of 1 to 4 mol/l.

14. Process according to any one of the preceding claims, in which step b) is carried out immediately after step a) and the weakly acidic aqueous phase used in step b) additionally comprises a buffer.

15. Process according to any one of Claims 1 to 13, which comprises, between step a) and step b), a step of stripping the acid present in the organic phase obtained on conclusion of step a) by bringing this phase into contact with a weakly acidic aqueous phase which comprises nitrate ions.

16. Process according to Claim 15, in which the weakly acidic aqueous phase used in the step of stripping the acid exhibits a pH of 1 to 3.

17. Process according to Claim 15 or Claim 16, in which the weakly acidic aqueous phase used in the step of stripping the acid exhibits a nitrate concentration of 0.1 to 3 mol/l.

18. Process according to either one of Claims 1 to 15, in which the nitrate ions are provided by a salt chosen from alkali metal nitrates and organic amine nitrates.

19. Process according to any one of the preceding claims, which additionally comprises a step of stripping the lanthanides and yttrium from the organic phase obtained on conclusion of step b).

20. Process for the reprocessing of an irradiated nuclear fuel, which comprises the implementation of a process according to any one of Claims 1 to 19, for recovering plutonium, neptunium, americium, curium and possibly uranium, pooled but selective fashion with regard to the fission products, from a solution for the dissolution of an irradiated nuclear fuel, downstream of a cycle for the extraction of uranium.

## Patentansprüche

1. Verfahren zur gruppierten Abtrennung von Actiniden (III), (IV), (V) und (VI), die in einer stark sauren wässrigen Phase vorliegen, welche auch Spaltprodukte, darunter Lanthanid und Yttrium, enthält, wobei das Verfahren die folgenden Schritte umfasst:
a) die Koextraktion der Actinide, der Lanthanide, des Yttriums und gegebenenfalls einiger weiterer Spaltprodukte aus der stark sauren wässrigen Phase durch Kontaktierung dieser Phase mit einer nicht mit Wasser mischbaren organischen Phase, die mindestens einen solvatisierenden Extraktanten, welcher ausgewählt ist aus den Diglykolamiden und den Malonamiden, in einem organischen Verdünnungsmittel enthält; und
b) die selektive Desextraktion der Actinide aus der organischen Phase durch Kontaktierung dieser organischen Phase mit einer schwach sauren wässrigen Phase, die mindestens ein komplexierendes Agens und Nitrationen enthält.

2. Verfahren nach Anspruch 1, wobei der solvatisierende Extraktant der folgenden Formel (I) entspricht:
R1(R2)N-C(O)-CH2-O-CH2-C(O)-N(R3)R4 (I)
worin R1 bis R4, die identisch oder verschieden sein können, Alkylgruppen sind.

3. Verfahren nach Anspruch 2, wobei der solvatisierende Extraktant der Formel (I) entspricht, worin R1 bis R4, die identisch oder verschieden sein können, 3 bis 12 Kohlenstoffatome umfassende Alkylgruppen sind.

4. Verfahren nach Anspruch 3, wobei der solvatisierende Extraktant N,N,N',N'-Tetraoctyl-3-oxapentandiamid ist.

5. Verfahren nach Anspruch 1, wobei der solvatisierende Extraktant der folgenden Formel (II) entspricht:
R5(R6)N-C(O)-CH(R7)-C(O)-N(R6)R5 (II)
worin:
- R5 und R6, die identisch oder verschieden sein können, für eine geradkettige oder verzweigte 1 bis 25 Kohlenstoffatome umfassende Alkylgruppe oder für eine Gruppe der folgenden Formel (III) stehen:
-(CH2)n-Z-(CH2)m-O-R8 (III)
worin R8 eine 1 bis 13 Kohlenstoffatome umfassende Alkylgruppe ist, n eine ganze Zahl von 0 bis 6 ist, Z eine einfache Bindung oder ein Sauerstoffatom ist und m eine ganze Zahl von 1 bis 6 ist, mit der Maßgabe, dass Z eine einfache Bindung ist, wenn n gleich 0 ist; während
- R7 für ein 12 bis 25 Kohlenstoffatome umfassendes Alkylradikal oder eine Gruppe der obigen Formel (III) steht, worin R8, n, Z und m dieselbe Bedeutung haben wie oben angegeben.

6. Verfahren nach Anspruch 5, wobei der solvatisierende Extraktant der Formel (II) entspricht, worin R7 für ein 12 bis 25 Kohlenstoffatome umfassendes Alkylradikal oder eine Gruppe der Formel: -(CH2)m-O-R8 steht, worin R8 und m dieselbe Bedeutung haben wie oben angegeben.

7. Verfahren nach Anspruch 5, wobei der solvatisierende Extraktant ausgewählt ist aus N,N'-Dimethyl-N,N'-Dibutyltetradecylmalonamid, N,N'-Dimethyl-N,N'-Dibutyldodecylmalonamid und N,N'-Dimethyl-N,N'-Dioctylhexylethoxymalonamid.

8. Verfahren nach einem der voranstehenden Ansprüche, wobei die in Schritt a) verwendete organische Phase weiterhin ein Dialkylmonoamid oder ein Trialkylphosphat enthält.

9. Verfahren nach einem der voranstehenden Ansprüche, wobei in Schritt a) die stark saure wässrige Phase mindestens ein komplexierendes Agens zum Hemmen der Koextraktion bestimmter Spaltprodukte enthält.

10. Verfahren nach einem der voranstehenden Ansprüche, wobei Schritt a) weiterhin das Waschen der am Ende der Koextraktion erhaltenen organischen Phase mit einer stark sauren wässrigen Phase, die mindestens ein komplexierendes Agens enthält, umfasst.

11. Verfahren nach einem der voranstehenden Ansprüche, wobei in Schritt a) die stark saure wässrige Phase mindestens ein reduzierendes Agens enthält.

12. Verfahren nach einem der voranstehenden Ansprüche, wobei die in Schritt b) verwendete schwach saure wässrige Phase einen pH-Wert von 1 bis 4, bevorzugt von ungefähr 2, aufweist.

13. Verfahren nach einem der voranstehenden Ansprüche, wobei DDE_LINK1die in Schritt b) verwendete schwach saure wässrige Phase eine Nitrationenkonzentration von 1 bis 5 mol/l, bevorzugt von 1 bis 4 mol/l, aufweist.

14. Verfahren nach einem der voranstehenden Ansprüche, wobei Schritt b) unmittelbar nach Schritt a) durchgeführt wird und die in Schritt b) verwendete schwach saure wässrige Phase weiterhin ein Pufferagens enthält.

15. Verfahren nach einem der Ansprüche 1 bis 13, umfassend zwischen Schritt a) und Schritt b) einen Schritt der Desextraktion der Säure, die in der am Ende des Schrittes a) erhaltenen organischen Phase vorliegt, durch Kontaktierung dieser Phase mit einer schwach sauren wässrigen Phase, die Nitrationen enthält.

16. Verfahren nach Anspruch 15, wobei die in dem Schritt der Desextraktion der Säure verwendete schwach saure wässrige Phase einen pH-Wert von 1 bis 3 aufweist.

17. Verfahren nach Anspruch 15 oder Anspruch 16, wobei die in dem Schritt der Desextraktion der Säure verwendete schwach saure wässrige Phase eine Nitratkonzentration von 0,1 bis 3 mol/l aufweist.

18. Verfahren nach einem der Ansprüche 1 bis 15, wobei die Nitrationen durch ein Salz bereitgestellt werden, das ausgewählt ist aus den Alkalimetallnitraten und den Nitraten organischer Amine.

19. Verfahren nach einem der voranstehenden Ansprüche, umfassend weiterhin einen Schritt der Desextraktion der Lanthanide und des Yttriums aus der am Ende des Schrittes b) erhaltenen organischen Phase.

20. Wiederaufarbeitungsverfahren für einen bestrahlten Kernbrennstoff, das die Durchführung eines Verfahrens nach einem der Ansprüche 1 bis 19 umfasst, zur gruppierten, aber gegenüber Spaltprodukten selektiven Wiedergewinnung des Plutoniums, des Neptuniums, des Americiums, des Curiums und gegebenenfalls des Urans ausgehend von einer Lösung zur Auflösung eines bestrahlten Kernbrennstoffs nach einem Uranextraktionszyklus.
